# EUROPÄISCHE PATENTSCHRIFT

(11) **EP 2 254 715 B1**
(45) Veröffentlichungstag und Bekanntmachung des Hinweises auf die Patenterteilung: **15.05.2013**
(21) Anmeldenummer: 09721525.5
(22) Anmeldetag: 12.03.2009
(51) Int. Cl.: B23B 5/16

(54) **WERKZEUG**
TOOL
OUTIL

(30) Priorität: 18.03.2008 DE 102008015581; 21.08.2008 DE 102008045325
(43) Veröffentlichungstag der Anmeldung: 01.12.2010
(73) Patentinhaber: MAPAL Fabrik für Präzisionswerkzeuge Dr. Kress KG, 73431 Aalen (DE)
(72) Erfinder: STROM, Rudolf, 71665 Vaihingen/Enz (DE)
(74) Vertreter: Gleiss, Alf-Olav
(86) Internationale Anmeldenummer: PCT/EP2009/001754
(87) Internationale Veröffentlichungsnummer: WO 2009/115222

(56) Entgegenhaltungen:
- EP-A- 0 689 928
- GB-A- 2 142 864
- US-A- 5 947 655
- US-A1- 2005 053 432

## Beschreibung

Die Erfindung betrifft ein Werkzeug zur Bearbeitung von Rohrenden gemäß Oberbegriff des Anspruchs 1.

Werkzeuge der hier angesprochenen Art sind bekannt. Sie werden zur Bearbeitung von Rohrenden, beispielsweise von Nockenwellen eingesetzt. Sie weisen ein Aufnahmeelement auf, welches beispielsweise als Hohlschaftkegel oder als Steilkegel ausgebildet ist, sowie einen Führungszapfen, der zur Führung des Werkzeugs in dem Rohrende dient, also beispielsweise in eine Nockenwelle eingeführt wird. Derartige Werkzeuge weisen vorzugsweise eine Tangentialplatte zur Stirnseitenbearbeitung eines Rohrendes, eine Schneidplatte zur Bearbeitung einer Außenfase sowie eine weitere Schneidplatte zur Bearbeitung einer Innenfase auf. Auf diese Weise ist es möglich, mit einem derartigen Werkzeug gleichzeitig eine Innenfase, sowie eine Außenfase eines Rohrendes und gleichzeitig die Stirnfläche des Rohrendes zu bearbeiten. Bekannte Werkzeuge zur Bearbeitung von Rohrenden weisen den Nachteil auf, dass sie komplex aufgebaut und dadurch besonders teuer in der Herstellung sind. Außerdem ist die Anpassung derartiger Werkzeuge an unterschiedliche Durchmesser eines Rohrendes sehr aufwändig.

Aufgabe der vorliegenden Erfindung ist es daher, ein Werkzeug zur Bearbeitung von Rohrenden zu schaffen, welches einfach aufgebaut und zudem kostengünstig herstellbar ist.

Zur Lösung dieser Aufgabe wird ein Werkzeug zur Bearbeitung von Rohrenden vorgeschlagen, welches die Merkmale des Anspruchs 1 aufweist. Es weist ein Aufnahmeelement, einen Führungszapfen und mindestens eine Schneidplattenhalterung zur Aufnahme einer Schneidplatte, insbesondere zur Herstellung und/oder Bearbeitung einer Innenfase auf. Das Werkzeug zeichnet sich dadurch aus, dass der Führungszapfen und die mindestens eine Schneidplattenhalterung einstückig ausgebildet sind. Dadurch ist das Werkstück zum einen einfach aufgebaut und zum anderen besonders kostengünstig herstellbar. Besonders vorteilhaft ist der dadurch erzielte modulare Aufbau des Werkzeugs. Durch die einstückige Ausbildung des Führungszapfens und der Schneidplattenhalterung ist es nämlich möglich, beide Elemente an einen bestimmten Innendurchmesser eines zu bearbeitenden Rohrendes anzupassen, sodass für die Bearbeitung eines Rohrendes mit einem bestimmten Innendurchmesser lediglich die passende Einheit aus Führungszapfen und Schneidplattenhalterung mit dem Aufnahmeelement in Eingriff gebracht werden muss, wobei der Führungszapfen einen an den Innendurchmesser des zu bearbeitenden Rohrendes angepassten Außendurchmesser aufweist und die Schneidplattenhalterung, beziehungsweise die Schneidplatte, in ihrer radialen Position an den Innendurchmesser des Rohrendes angepasst ist. Außerdem kann eine Befestigung der Einheit aus Führungszapfen und der mindestens einen Schneidplattenhalterung wesentlich stabiler in dem Aufnahmeelement erfolgen.

Ferner zeichnet sich das Werkzeug dadurch aus, dass der Führungszapfen und die Schneidplattenhalterung eine Einheit bilden, die einen Befestigungsabschnitt zur Befestigung der Einheit an dem Aufnahmeelement aufweist. Es ist weiter vorgesehen, dass der Befestigungsabschnitt einstückig mit der Einheit aus Führungszapfen und Schneidplattenhalterung ausgebildet ist und zentrisch in dem Aufnahmeelement angeordnet ist. Durch die einstückige Ausbildung und die zentrische Anordnung des Befestigungsabschnitts ergibt sich eine besonders stabile Lagerung der Einheit in dem Aufnahmeelement, sodass eine exakte Führung des Werkzeugs und Bearbeitung des Rohrendes gewährleistet sind.

Weiterhin bevorzugt wird ein Werkzeug, das sich dadurch auszeichnet, dass der Befestigungsabschnitt eine erste Spannfläche aufweist, die mit einer ersten Befestigungsschraube zusammenwirkt. Insbesondere ist vorgesehen, dass die erste Spannfläche gegenüber der Mittelachse der Einheit um ca. 3° bis 5° in Richtung des Führungszapfens abfallend geneigt ist. Vorzugsweise ist noch eine zweite geneigte Spannfläche an dem Befestigungsabschnitt vorgesehen, die mit einer zweiten, vorzugsweise einen Konus aufweisenden Befestigungsschraube zusammenwirkt und die in der entgegengesetzten Richtung wie die erste Spannfläche gegenüber der Mittelachse geneigt ist. Auf diese Weise ist eine besonders sichere und stabile Montage der Einheit aus Führungszapfen und Schneidplattenhalterung möglich.

Schließlich wird noch ein Werkzeug bevorzugt, das sich dadurch auszeichnet, dass die Einheit wenigstens einen Kühl-/Schmiermittelkanal aufweist. Auf diese Weise kann durch den vorzugsweise zentrisch angeordneten Befestigungsabschnitt Kühl- und/oder Schmiermittel von dem Aufnahmeelement bis zu dem Führungszapfen und bis zu der Schneidplattenhalterung geleitet werden, sodass einerseits der Führungszapfen des Werkzeugs in dem Rohrende geschmiert, andererseits abgetragene Späne bei der Bearbeitung der Innenfase weggespült werden und die Schneidplatte gleichzeitig gekühlt wird.

Die Erfindung wird im Folgenden anhand der Zeichnung näher erläutert. Es zeigen:
- Figur 1: eine Prinzipskizze einer Einheit aus Führungszapfen, Schneidplattenhalterung und Befestigungsabschnitt;
- Figur 2: eine schematische Explosionsdarstellung des Werkzeugs, und
- Figur 3: ein Werkzeug in zusammengesetztem Zustand.

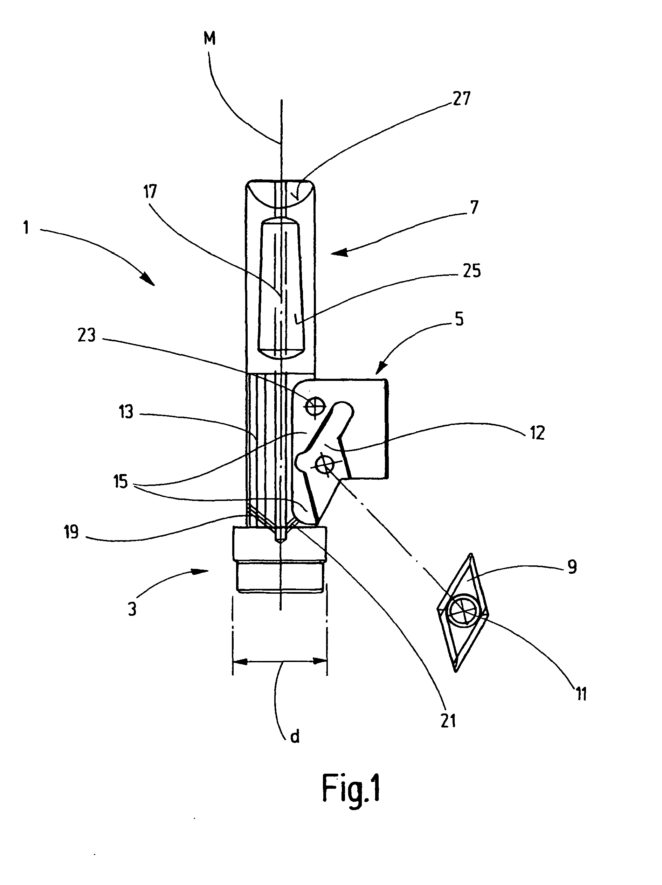

Figur 1 zeigt eine Prinzipskizze einer Einheit 1, die einen Führungszapfen 3, eine Schneidplattenhalterung 5 und einen Befestigungsabschnitt 7 aufweist. Vorzugsweise ist, wie hier dargestellt ist, vorgesehen, dass der Führungszapfen 3, die Schneidplattenhalterung 5 und der Befestigungsabschnitt 7 einstückig ausgebildet sind. Beispielsweise ist es denkbar, die Einheit 1 mit spanenden Bearbeitungsverfahren aus einem Werkstück herzustellen. Der Führungszapfen 3 weist einen Durchmesser d auf, der an den jeweiligen Innendurchmesser des zu bearbeitenden Rohrendes angepasst ist.

Die Schneidplattenhalterung 5 dient zur Aufnahme einer Schneidplatte 9, die hier beispielhaft viereckig ausgebildet ist und zur Bearbeitung einer Innenfase eines hier nicht dargestellten Rohrendes dient. Die Schneidplatte 9 ist vorzugsweise mit einer hier nur angedeuteten Befestigungsschraube 11 an der Schneidplattenhalterung 5 befestigt. Die Schneidplattenhalterung 5 umfasst im Übrigen noch einen Aufnahmebereich 12 zur Aufnahme der Schneidplatte 9, der im Wesentlichen an die Kontur der Schneidplatte 9 angepasst ist.

Der Führungszapfen 3 und die Schneidplattenhalterung 5 sind derart miteinander verbunden, beziehungsweise sind derart relativ zueinander angeordnet, dass sowohl der Führungszapfen 3 als auch die Schneidplattenhalterung 5, beziehungsweise der Aufnahmebereich 12 zur Aufnahme der Schneidplatte 9, an einen bestimmten Innendurchmesser eines zu bearbeitenden Rohrendes angepasst sind. Bei der Bearbeitung eines Rohrendes mit größerem oder kleinerem Innendurchmesser muss der Führungszapfen 3 einen entsprechend kleineren oder größeren Durchmesser d aufweisen, und die Schneidplattenhalterung 5, beziehungsweise der Aufnahmebereich 12, muss um den entsprechenden Betrag bezüglich der Mittelachs M radial weiter innen oder außen angeordnet sein.

Somit sind für verschiedene Innendurchmesser von verschiedenen zu bearbeitenden Rohrenden jeweils die entsprechenden Einheiten 1 vorgesehen, deren Führungszapfen 3 und deren Schneidplatte 9 bereits an den erforderlichen Positionen angeordnet ist, ohne dass eine aufwändige Positionierung von einzelnen Elementen notwendig ist.

Es kann auch vorgesehen sein, dass die Position, beziehungsweise die Winkellage der Schneidplatte 9 zur Erzeugung verschiedener (Innen-)Fasenwinkel angepasst werden muss. Hierzu ist vorzugweise vorgesehen, dass der Aufnahmebereich 12 einer Einheit 1 die benötigte Winkellage der Schneidplatte 9 aufweist. Auch in diesem Fall muss für einen bestimmten Innendurchmesser des Rohrendes mit einem gewünschten Innenfasenwinkel lediglich die passende Einheit 1 mit der Aufnahmeeinheit in Eingriff gebracht werden.

Es ist jedoch auch möglich, eine hier nicht dargestellte Einstelleinrichtung an der Schneidplattenhalterung 5 vorzusehen, über die eine Einstellung der Winkellage der Schneidplatte 9 und damit des gewünschten Fasenwinkels, erfolgen kann.

Die Schneidplattenhalterung 5 ist vorzugsweise über einen Verbindungsabschnitt 13 mit dem Führungszapfen 3 und dem Befestigungsabschnitt 7 verbunden. Vorzugsweise ist vorgesehen, dass der Führungszapfen 3, die Schneidplattenhalterung 5, der Verbindungsabschnitt 13 und der Befestigungsabschnitt 7 einstückig ausgebildet sind. Vorzugsweise ist noch vorgesehen, dass die Schneidplattenhalterung 5 einen Spanraum 15 aufweist, der von dem Verbindungsabschnitt 13 begrenzt wird. Der Spanraum 15 dient zur Aufnahme von während der Bearbeitung des Rohrendes durch die Schneidplatte 11 abgetragenem Material.

In der Einheit 1 ist vorzugsweise mindestens ein Kühl-/Schmiermittelkanal 17 vorgesehen, der sich im Wesentlichen entlang der Mittelachse M der Einheit 1 erstreckt und der über ein hier nicht dargestelltes Aufnahmeelement mit Kühl- und/oder Schmiermittel versorgt wird. Der Kühl-/Schmiermittelkanal 17 verläuft in dem Befestigungsabschnitt 7 und dem Verbindungsabschnitt 13 bis hin zu dem Führungszapfen 3.

Vorzugsweise ist vorgesehen, dass von dem zentralen Kühl-/Schmiermittelkanal 17 mindestens ein, hier zwei Zweigkanäle 19 und 21 ausgehen. Der Zweigkanal 19 dient dabei im Wesentlichen zur Versorgung des Führungszapfens 3 mit einem Kühl-/Schmiermittel, und der Zweigkanal 21 dient zur Versorgung des Spanraums 15 mit einem Kühl-/Schmiermittel, sodass abgetragene Späne von dem Rohrende weggespült werden und gleichzeitig eine Kühlung der Schneidplatte 9 erfolgt.

Bei dem in Figur 1 dargestellten Ausführungsbeispiel sind Zweigkanäle 19 und 21 nicht exakt radial ausgerichtet, sondern verlaufen unter einem Winkel von weniger als 90° zur Mittelachse M und damit zum zentralen Kühl-/Schmiermittelkanal 17. Die Neigung der Zweigkanäle 19 und 21 ist so gewählt, dass sie ausgehend vom zentralen Kühl-/Schmiermittelkanal 17 in Richtung zum Befestigungsabschnitt 7 geneigt sind. Dabei ist vorzugsweise vorgesehen, dass die Neigung der Zweigkanäle 19 und 21 gleich ist.

Durch diese Anordnung der Zweigkanäle 19 und 21 wird sichergestellt, dass das Kühl-/Schmiermittel nach hinten strömt, also entgegengesetzt zu der Vorschubrichtung, in der die Einheit 1 bei der Bearbeitung eines Rohrendes bewegt wird. Es ergibt sich damit eine sogenannte Rückspülung der von der Schneidplatte 9 abgetragenen Späne. Diese werden also entgegen der Vorschubrichtung der Einheit 1 aus dem Bearbeitungsbereich gespült, sodass sie von dem bearbeiteten Rohrende wegbewegt werden. Der Kühl/Schmiermittelstrahl ist also nach hinten in Richtung auf den Befestigungsabschnitt 7 gerichtet, sodass das Kühl-/Schmiermittel auch gegen die Schneidplatte 9 und insbesondere gegen die aktive Schneide der Schneidplatte 9 gerichtet ist, welche die Innenfase herstellt und/oder bearbeitet.

Vorzugsweise ist noch eine Befestigungsschraube 23 zur Fixierung der Schneidplattenhalterung 5 an dem hier nicht dargestellten Aufnahmeelement vorgesehen.

Die Einheit 1, insbesondere der Befestigungsabschnitt 7, weist eine erste Spannfläche 25 auf, die mit einer hier nicht dargestellten ersten Befestigungsschraube zusammenwirkt. Der Befestigungsabschnitt 7 weist außerdem eine zweite Spannfläche 27 auf, die mit einer hier ebenfalls nicht dargestellten zweiten Befestigungsschraube zusammenwirkt.

Vorzugsweise ist vorgesehen, dass die Spannfläche 25 gegenüber der Mittelachse M der Einheit 1 um zirka 3° bis 5° in Richtung des Führungszapfens 3 geneigt ist, sodass die Spannfläche 25 also zu der Mittelachse M hin in Richtung des Führungszapfens 3 abfällt. Auch die zweite Spannfläche 27 ist geneigt, jedoch wesentlich stärker, beispielsweise unter einem Winkel von 45°. Anders als die Spannfläche 25 fällt die Spannfläche 27 in Richtung der Mittelachse M in der dem Führungszapfen 3 entgegengesetzten Richtung ab. Somit sind die beiden Spannflächen 25 und 27 in zwei entgegengesetzten Richtungen geneigt. Die Spannflächen 25 und 27 sind also in zwei Ebenen angeordnet, die sich unter einem Winkel schneiden und die mit der Mittelachse M ein Dreieck einschließen.

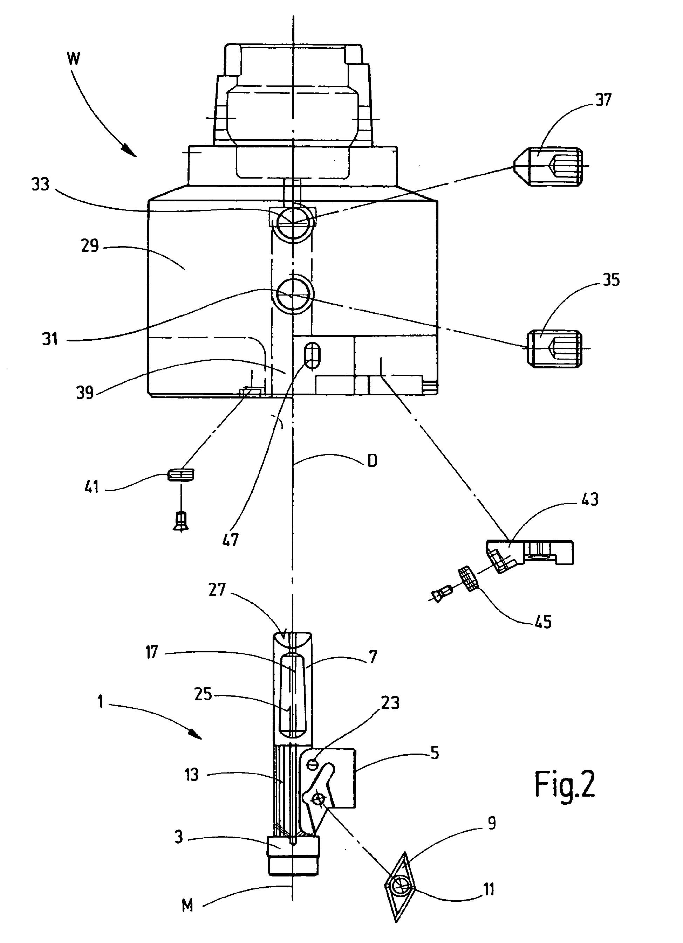

Figur 2 zeigt eine schematische Explosionsdarstellung eines Werkzeugs. Gleiche Teile sind mit gleichen Bezugszeichen versehen, sodass insofern auf die Beschreibung zu Figur 1 verwiesen wird.

In Figur 2 erkennbar ist die Einheit 1, die den einstückig mit der Schneidplattenhalterung 5 ausgebildeten Führungszapfen 3 aufweist. Die Einheit 1 wird vorzugsweise zentrisch in einem Aufnahmeelement 29 eines Werkzeugs W angeordnet, das heißt also, dass die Mittelache M der Einheit 1 mit der Drehachse D des Werkzeugs W, beziehungsweise des Aufnahmeelements 29, zusammenfällt. Das Aufnahmeelement 29 ist hier rein beispielhaft als Hohlschaftkegel ausgebildet, denkbar ist jedoch auch eine Ausbildung als Steilkegel.

Das Aufnahmeelement 29 weist in seiner Umfangsfläche zwei Öffnungen 31 und 33 auf, die mit einem Innengewinde versehen sind und die zur Aufnahme der zwei Befestigungsschrauben 35 und 37 dienen, wobei die erste Befestigungsschraube 35 mit der ersten Spannfläche 25 und die zweite, vorzugsweise konusförmig ausgebildete Befestigungsschraube 37 mit der zweiten Spannfläche 27 zusammenwirkt.

Bei einer Befestigung der Einheit 1 an dem Aufnahmeelement 29 wird diese in einen entsprechenden Aufnahmebereich 39 in das Aufnahmeelement 29 eingeführt und zunächst mit der ersten Befestigungsschraube 35 fixiert. Anschließend wird die zweite Befestigungsschraube 37 in die Öffnung 33 geschraubt, wodurch die eine konusförmig ausgebildete Befestigungsschraube 37 auf die zweite Spannfläche 27 einwirkt, sodass quasi ein Keilgetriebe realisiert wird. Auf diese Weise wird bei einer weiteren Verlagerung der Befestigungsschraube 37 in das Aufnahmeelement 29 hinein, die Einheit 1 in Richtung der ersten Befestigungsschraube 35 verlagert, sodass die Spannfläche 25 gegen die Befestigungsschraube 35 gepresst wird. Auf diese Weise ist eine sichere und stabile Lagerung der Einheit 1 in dem Aufnahmeelement 29, insbesondere bei der Bearbeitung eines Rohrendes, gewährleistet.

Die Befestigungsschrauben 35 und 37 fixieren also die Einheit 1 sicher am Aufnahmeelement 29. Sie dienen aber insbesondere dazu, die Einheit 1 gegenüber dem Aufnahmeelement 29 axial einzustellen. Dies ist durch die Ausrichtung der Spannfläche 25 der Befestigungsschraube 36 und der Spannfläche 27 der Befestigungsschraube 37 möglich. Die Befestigungsschrauben 35 und 37 dienen daher insbesondere als Justierschrauben.

Aus Figur 2 ist noch erkennbar, dass das Werkzeug W rein beispielhaft noch eine weitere, hier als Tangentialschneidplatte ausgebildete Schneidplatte 41 zur Bearbeitung einer Stirnfläche eines nicht dargestellten Rohrendes aufweist. Außerdem ist hier ebenfalls rein beispielhaft noch eine weitere Schneidplattenhalterung 43 vorgesehen, die zur Aufnahme einer dritten Schneidplatte 45 zur Erzeugung einer Außenfase an dem Rohrende dient.

Das Aufnahmeelement 29 weist noch eine Öffnung 47 auf, über welche die Befestigungsschraube 23 in die Schneidplattenhalterung 5 eingreift, um einen sicheren Halt der Schneidplattenhalterung 5 an dem Aufnahmeelement 29 zu gewährleisten und Vibrationen zu minimieren.

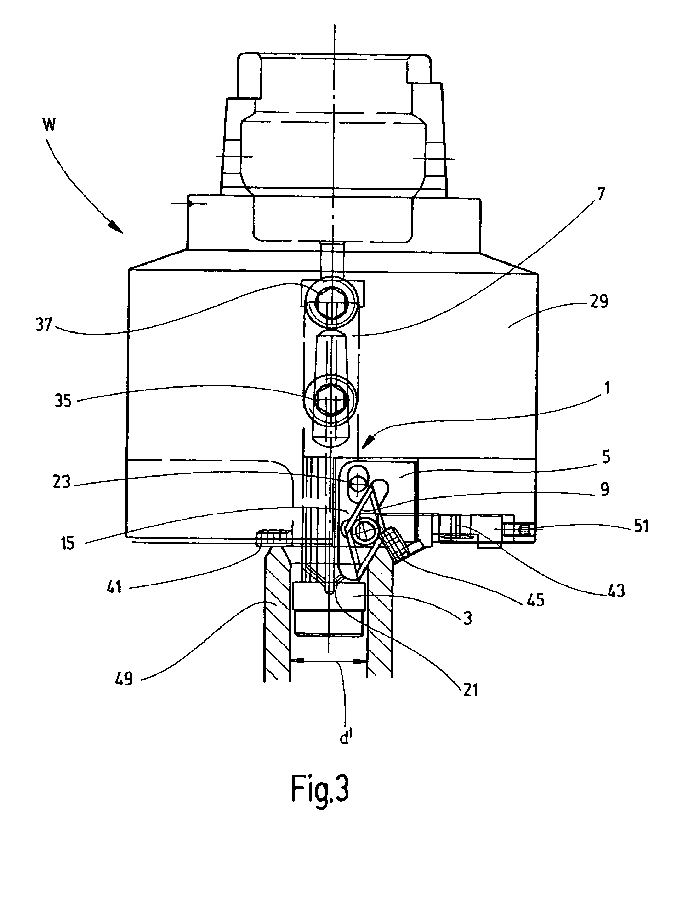

Figur 3 zeigt eine Prinzipskizze des Werkzeugs W. Gleiche Teile sind mit gleichen Bezugszeichen versehen, sodass insofern auf die Beschreibung zu den vorangegangenen Figuren verwiesen wird.

In Figur 3 ist das Werkzeug W in zusammengebautem Zustand und während der Bearbeitung eines Rohrendes 49 dargestellt, sodass also die Einheit 1 in dem Aufnahmeelement 29 angeordnet ist und dort mittels des Befestigungsabschnitts 7 und den Befestigungsschrauben 35 und 37 sicher fixiert ist.

Der Führungszapfen 3 ist in dem Rohrende 49 angeordnet, während die (Tangential-)Schneidplatte 41 an der Stirnseite des Rohrendes 49 angeordnet ist. Die Schneidkanten der Schneidplatten 9 und 45 sind unter einem Winkel zueinander zur Erzeugung einer Innen- und einer Außenfase an dem Rohrende 49 angeordnet. Die radiale Position bezüglich der Drehachse D der einzelnen Schneidplatten 9, 41 und 45 muss jeweils an den zu bearbeitenden Rohrenddurchmesser angepasst werden. Hierzu ist die Schneiplattenhalterung 43 vorzugsweise mittels einer Einstelleinrichtung 51 in radialer Richtung, also senkrecht zu der Drehachse D, verlagerbar.

Auch die Schneidplattenhalterung 5 muss beispielsweise bei einem größeren Innendurchmesser eines Rohrendes radial weiter nach außen, also weiter von der Drehachse D weg, verlagert werden. Ferner muss der Führungszapfen 3 einen entsprechend größeren Durchmesser d aufweisen, der an den entsprechenden Innendurchmesser d' des zu bearbeitenden Rohrendes angepasst ist, um eine exakte Positionierung des Werkzeugs W bezüglich des Rohrendes 49 zu gewährleisten.

Durch das hier vorgeschlagene Werkzeug W können der Führungszapfen 3 und die Schneidplattenhalterung 5 besonders einfach an einen anderen Rohrenddurchmesser angepasst werden, indem einfach die Einheit 1 gegen eine an den Innendurchmesser d' des zu bearbeitenden Rohrendes 49 angepasste Einheit ausgetauscht wird.

Die Einheit 1 ist hierzu vorzugsweise derart ausgebildet, dass bei einem größeren Durchmesser d des Führungszapfens 3, der an einen größeren Innendurchmesser d' angepasst ist, die Schneidplattenhalterung 5 derart mit dem Führungszapfen 3 verbunden ist, dass sie in radialer Richtung gesehen weiter von der Drehachse D weg angeordnet ist, sodass ihre radiale Position gerade an den größeren Innendurchmesser d' des zu bearbeitenden Rohrendes 49 angepasst ist.

Auf diese Weise muss die radiale Position der Schneidplattenhalterung 5 nicht aufwändig, beispielsweise mittels einer entsprechenden Einstelleinrichtung, für ein zu bearbeitendes Rohrende 49 mit anderem Innendurchmesser d' angepasst werden, sondern sie ist mit Auswahl des passenden Führungszapfens 3 automatisch an den jeweiligen Rohrendinnendurchmesser angepasst. Dadurch ergibt sich ein besonders vorteilhafter modularer Aufbau des Werkzeugs W, da für verschiedene Rohrenden 49 unterschiedlichen Durchmessers nur noch ein einziges zentrales Element, nämlich die Einheit 1 ausgetauscht werden muss.

Auch ist es denkbar, die Ausrichtung des Aufnahmebereichs 12 bereits an den gewünschten Innenfasenwinkel anzupassen, sodass mit Auswahl des richtigen Führungszapfens 3 gleichzeitig die gewünschte Fasenwinkeleinstellung der Schneidplatte 9 gegeben ist. Denkbar ist es jedoch auch, die Schneidplattenhalterung 5 zur Veränderung des Innenfasenwinkels mit einer entsprechenden, hier nicht dargestellten Einstelleinrichtung auszustatten, sodass gleiche Rohrenddurchmesser mit unterschiedlichen Innenfasenwinkeln versehen werden können.

Insgesamt wird deutlich, dass durch die hier vorgeschlagene einstückige Ausbildung des Führungszapfens 3 und der Schneidplattenhalterung 5 ein vorteilhafter modularer Aufbau des Werkzeugs W möglich ist, sodass also der Führungszapfen 3 und gleichzeitig die Schneidplattenhalterung 5 einer Einheit 1 an den Innendurchmesser des zu bearbeitenden Rohrendes 49 angepasst sind, beziehungsweise gleichzeitig auch die Winkellage der Schneidplatte 9 auf den zu bearbeitenden Innenfasenwinkel exakt abgestimmt werden kann. Denkbar ist es auch, dass die Schneidplattenhalterung 5 eine Einstelleinrichtung aufweist, sodass auf diese Weise eine Veränderung des Schneidplattenwinkels möglich ist.

Auf diese Weise kann durch die Verwendung eines einzigen zentralen Elements, nämlich der Einheit 1, immer der exakt an den Innendurchmesser d' des jeweiligen Rohrendes 49 angepasste Führungszapfen 3 und gleichzeitig die an der richtigen radialen Position angeordnete Schneidplattenhalterung 5 für das zu bearbeitenden Rohrende 49 eingesetzt werden. Somit kann auf eine Einstelleinrichtung in radialer Richtung verzichtet werden.

Außerdem kann eine Befestigung der Einheit 1 aus Führungszapfen 3 und der mindestens einen Schneidplattenhalterung 5 wesentlich stabiler in dem Aufnahmeelement 29 erfolgen, dadurch, dass der Führungszapfen 3 und die Schneidplattenhalterung 5 den gemeinsamen Befestigungsabschnitt 7 aufweisen.

Durch den vorteilhaften Befestigungsabschnitt 7, der vorzugsweise einstückig, insbesondere über einen Verbindungsabschnitt 13 mit der Schneidplattenhalterung 5 und dem Führungszapfen 3 ausgebildet ist, ist somit eine besonders stabile Lagerung der Einheit 1 in dem Aufnahmeelement 29 möglich, sodass eine exakte Führung und Bearbeitung von Rohrenden 49 verschiedenen Durchmessers möglich ist.

Grundsätzlich kann die Schneidplattenhalterung 5 beliebig ausgestaltet sein, beispielsweise ist es noch denkbar, wie oben bereits erwähnt wurde, Verstellmechanismen in die Schneidplattenhalterung zu integrieren.

Figur 3 zeigt noch, dass die oben erwähnten Zweigkanäle 19 und 21 so ausgerichtet sind, dass nicht nur die aktive Schneide der Schneidplatte 9 sondern auch die der Schneidplatte 41 mit Kühl-/Schmiermittel beaufschlagt wird. Die Kühlung der Schneidplatte 41 ist deshalb besonders effektiv, weil die Zweigkanäle 19 und 21 nach hinten, also in Richtung auf das Aufnahmeelement 29 gerichtet sind. Es zeigt sich auch, dass nicht nur Späne durch die Ausrichtung der Zweigkanäle 19 und 21 besonders effektiv von der Schneidplatte 9 rückgespült werden, sondern auch Späne von der aktiven Schneide der Schneidplatte 41 weggespült werden.

## Patentansprüche

1. Werkzeug (W) zur Bearbeitung von Rohrenden (49), mit
- einem Aufnahmeelement (29), einem einen Durchmesser (d) aufweisenden Führungszapfen (3) und mindestens einer Schneidplattenhalterung (5) mit einem Aufnahmebereich (12) zur Aufnahme einer Schneidplatte (9) zur Bearbeitung einer Innenfase des Rohrendes,
- **dadurch gekennzeichnet, dass** der Führungszapfen (3) und die mindestens eine Schneidplattenhalterung (5) einstückig ausgebildet sind, wobei
- der Führungszapfen (3) und die Schneidplattenhalterung (5) eine Einheit (1) bilden, die einen Befestigungsabschnitt (7) zur Befestigung der Einheit (1) an dem Aufnahmeelement (29) aufweist,
- der Befestigungsabschnitt (7) einstückig mit der Einheit (1) ausgebildet ist, und wobei
- der Befestigungsabschnitt (7) zentrisch in dem Aufnahmeelement (29) angeordnet ist.

2. Werkzeug nach Anspruch 1, **dadurch gekennzeichnet, dass** der Befestigungsabschnitt (7) eine erste Spannfläche (25) aufweist, die mit einer ersten Befestigungsschraube (35) zusammenwirkt.

3. Werkzeug nach Anspruch 2, **dadurch gekennzeichnet, dass** die erste Spannfläche (25) gegenüber der Mittelachse (M) der Einheit (1) um ca. 3 bis 5° in Richtung des Führungszapfens (3) geneigt ist.

4. Werkzeug nach Anspruch 2 oder 3, **dadurch gekennzeichnet, dass** der Befestigungsabschnitt (7) eine zweite geneigte Spannfläche (27) aufweist, die mit einer zweiten, vorzugsweise einen Konus aufweisenden Befestigungsschraube (37) zusammenwirkt und die in der entgegen gesetzten Richtung wie die erste Spannfläche (25) gegenüber der Mittelachse (M) geneigt ist.

5. Werkzeug nach einem der vorhergehenden Ansprüche, **dadurch gekennzeichnet, dass** in der Einheit (1) mindestens ein Kühl-/Schmiermittelkanal (17) vorgesehen ist.

6. Werkzeug nach einem der vorhergehenden Ansprüche, **dadurch gekennzeichnet, dass** es mindestens eine weitere Schneidplatte (41) zur Stirnseitenbearbeitung und mindestens eine weitere Schneidplatte (45) zur Bearbeitung einer Außenfase eines Rohrendes (49) aufweist.

## Claims

1. A tool (W) for the machining of pipe ends (49), comprising
- a receiving element (29), a guide pin (3) having a diameter (d), and at least one cutting plate holder (5) comprising a receiving region (12) for receiving a cutting plate (9) for the machining of an internal chamfer of the pipe end,
- **characterized in that** the guide pin (3) and the at least one cutting plate holder (5) are formed integrally, wherein
- the guide pin (3) and the cutting plate holder (5) form a unit (1) which comprises a mounting section (7) for mounting the unit (1) to the receiving element (29),
- the mounting section (7) is formed integrally with the unit (1), and
wherein
- the mounting section (7) is arranged centrally in the receiving element (29).

2. The tool according to claim 1, **characterized in that** the mounting section (7) comprises a first clamping surface (25) which cooperates with a first mounting screw (35).

3. The tool according to claim 2, **characterized in that** the first clamping surface (25) is inclined towards the guide pin (3) by approx. 3 to 5 degrees in relation to the central axis (M) of the unit (1).

4. The tool according to claim 2 or 3, **characterized in that** the mounting section (7) comprises a second inclined clamping surface (27) which cooperates with a second mounting screw (37) that, preferably, comprises a cone, said second inclined clamping surface (27) being inclined in relation to the central axis (M) in a direction extending opposite to the first clamping surface (25).

5. The tool according to any one of the preceding claims, **characterized in that** at least one coolant/lubricant duct (17) is provided in the unit (1).

6. The tool according to any one of the preceding claims, **characterized in that** it comprises at least one further cutting plate (41) for machining the front face and at least one further cutting plate (45) for machining an external chamfer of a pipe end (49).

## Revendications

1. Outil (W) pour usiner des extrémités de tuyau (49), comprenant,
- un élément de réception (29), une broche de guidage (3) présentant un diamètre (d) et au moins une fixation de plaque de lame (5) avec une zone de réception (12) pour recevoir une plaque de lame (9) pour usiner un chanfrein intérieur de l'extrémité de tuyau,
- **caractérisé en ce que** la broche de guidage (3) et l'au moins une fixation de plaque de lame (5) sont conçues d'une seule pièce, dans lequel
- la broche de guidage (3) et la fixation de plaque de lame (5) forment une unité (1) qui présente une section de fixation (7) pour fixer l'unité (1) à l'élément de réception (29),
- la section de fixation (7) est conçue d'une seule pièce avec l'unité (1), et dans lequel
- la section de fixation (7) est disposée de manière centrale dans l'élément de réception (29).

2. Outil selon la revendication 1, **caractérisé en ce que** la section de fixation (7) présente une première surface de serrage (25) qui coopère avec une première vis de fixation (35).

3. Outil selon la revendication 2, **caractérisé en ce que** la première surface de serrage (25) est inclinée d'environ 3° à 5° en direction de la broche de guidage (3) par rapport à l'axe médian (M) de l'unité (1).

4. Outil selon la revendication 2 ou 3, **caractérisé en ce que** la section de fixation (7) présente une seconde surface de serrage (27) inclinée qui coopère avec une deuxième vis de fixation (37), présentant de préférence un cône, et qui est inclinée dans la direction opposée à la première surface de serrage (25) par rapport à l'axe médian (M).

5. Outil selon l'une des revendications précédentes, **caractérisé en ce qu'**au moins un canal de réfrigérant/lubrifiant (17) est prévu dans l'unité (1).

6. Outil selon l'une des revendications précédentes, **caractérisé en ce qu**'il présente au moins une plaque de lame supplémentaire (41) pour l'usinage des faces avant et au moins une plaque de lame supplémentaire (45) pour usiner un chanfrein extérieur d'une extrémité de tuyau (49).
